# FASCICULE DE BREVET EUROPEEN

(11) **EP 1 162 351 B1**
(45) Date de publication et mention de la délivrance du brevet: **22.10.2003**
(21) Numéro de dépôt: 01401252.0
(22) Date de dépôt: 15.05.2001
(51) Int. Cl.: F01N 3/021, F01N 3/023, F01N 3/022, F01N 3/08, F01N 7/08

(54) **Véhicule automobile comportant un filtre à particules à l'interieur du compartiment moteur et procédé et installation de nettoyage du filtre à particules**
Kraftfahrzeug mit einem im innerhalb des Motorraums angeordneten Partikelfilter und Verfahren und Anlage zum Reinigen des Partikelfilters
Motor vehicle comprising a particulate filter inside the engine compartment and method and installation for cleaning said particulate filter

(30) Priorité: 08.06.2000 FR 0007362
(43) Date de publication de la demande: 12.12.2001
(73) Titulaire: Peugeot Citroen Automobiles SA, 92200 Neuilly sur Seine (FR)
(72) Inventeur: Noirot, Rémi, 92800 Puteaux (FR)
(74) Mandataire: Bouget, Lucien

(56) Documents cités:
- EP-A- 0 308 972
- EP-A- 0 758 713
- EP-A- 1 060 780
- DE-A- 4 134 949
- US-A- 5 398 504
- PATENT ABSTRACTS OF JAPAN vol. 1999, no. 13, 30 novembre 1999 (1999-11-30) & JP 11 210445 A (MITSUBISHI MOTORS CORP), 3 août 1999 (1999-08-03)
- PATENT ABSTRACTS OF JAPAN vol. 2000, no. 08, 6 octobre 2000 (2000-10-06) & JP 2000 130158 A (TOYOTA MOTOR CORP;AISIN TAKAOKA LTD), 9 mai 2000 (2000-05-09)

## Description

L'invention concerne un véhicule automobile à moteur thermique comprenant un compartiment moteur dans une partie avant du véhicule et une ligne d'échappement de gaz de combustion du moteur comportant un filtre à particules.

Les véhicules automobiles de conception récente et en particulier les véhicules automobiles à moteur Diesel comportent généralement une ou plusieurs lignes d'échappement constituées d'un conduit sur lequel est placé un dispositif de dépollution comportant un filtre à particules.

Les gaz d'échappement des moteurs Diesel qui utilisent du gazole comme carburant renferment à la fois des polluants gazeux tels que des hydrocarbures imbrûlés et des oxydes d'azote ou de carbone et des polluants solides qui sont principalement constitués par des particules de suie. Les normes antipollution appliquées aux moteurs Diesel nécessitent une élimination de plus en plus poussée des émissions de particules de suie dans les gaz d'échappement de ces moteurs.

Afin d'assurer l'élimination des particules de suie, un post-traitement des gaz d'échappement utilisant un filtre à particules est nécessaire.

Un tel filtre à particules est installé dans la ligne d'échappement du moteur et comporte au moins un élément de filtration constitué par un corps filtrant à structure poreuse éventuellement associé à un autre élément de dépollution, fixé dans une enveloppe métallique qui est reliée à la ligne d'échappement. Le support filtrant ou les éléments filtrants disposés dans l'enveloppe métallique du filtre sont généralement constitués par des éléments en matière céramique poreuse. Le support filtrant est traversé par les gaz d'échappement entre une extrémité d'entrée et une extrémité de sortie du filtre, ce qui permet de retenir les particules solides de suie en suspension dans les gaz d'échappement, afin d'obtenir un gaz épuré, en sortie. Le filtre à particules peut être disposé en aval d'un catalyseur d'oxydation ou de type piège à NOx ou d'autres types.

Au cours du fonctionnement du moteur, le corps filtrant se charge de particules de suie qui se déposent à l'intérieur de ses porosités, de sorte que le filtre se colmate progressivement. Le décolmatage du filtre peut être obtenu en faisant brûler les suies déposées dans les porosités du corps filtrant, sur la ligne même d'échappement, pendant l'utilisation du véhicule automobile.

Les suies en présence d'oxygène brûlent à des températures de l'ordre de 550 à 600°C. De tels niveaux thermiques ne sont que rarement atteints par les gaz d'échappement d'un moteur Diesel d'un véhicule de tourisme. De ce fait, il est nécessaire de favoriser le début de la régénération des éléments de filtration par ajout dans le carburant d'un additif permettant d'abaisser la température de combustion des suies. Les additifs sont généralement constitués par des composés organométalliques qui, mélangés dans des proportions déterminées au gazole, suivent le circuit du gazole. Ils sont ainsi injectés dans la chambre de combustion par le système d'injection et le résidu de combustion se retrouve dans les gaz d'échappement.

La présence des additifs dans le filtre à particules où ils sont mélangés intimement avec les particules de suie leur permet de jouer un rôle catalyseur lors de la combustion des particules de suie et d'abaisser les températures d'inflammation des suies aux environs de 350 à 550°C.

La combustion, éventuellement catalysée, des suies dans le filtre à particules permet d'éliminer les composés organiques et le carbone contenus dans les suies. Cependant, à l'issue de la régénération du filtre par combustion, il subsiste des résidus minéraux qui sont retenus dans les pores et les canaux de l'élément filtrant. Ces résidus minéraux proviennent en particulier des additifs d'aide à la combustion des suies, d'autres additifs incorporés au gazole ou encore de lubrifiants. Ces résidus peuvent être constitués également par des particules dues à l'usure du moteur ou provenant de l'environnement extérieur, lorsque de telles particules ne sont pas retenues par le filtre à air du moteur.

Dans le cas des véhicules automobiles comportant un moteur à essence, la ligne d'échappement peut également comporter un filtre à particules, en prévision du post-traitement de leurs émissions de particules dont les niveaux pourraient être éventuellement soumis à une réglementation, dans l'avenir.

Dans tous les cas, la ligne d'échappement sur laquelle est intercalé le filtre à particules est disposée horizontalement sous le plancher du véhicule automobile ou dans un sous-plancher. L'enveloppe métallique du filtre à particules qui est généralement de forme cylindrique est placée dans une disposition horizontale entre deux tronçons du conduit d'échappement. Le corps_filtrant ou les éléments filtrants disposés dans l'enveloppe du filtre ont également une disposition horizontale à l'intérieur de l'enveloppe métallique, de sorte que les gaz d'échappement parcourent les éléments filtrants dans une direction horizontale et tendent à entraîner les particules vers l'extrémité de sortie du filtre. Il en résulte une accumulation de particules dans la partie de sortie des éléments filtrants. Lors de la régénération du filtre par combustion des particules de suie en présence d'additifs, il subsiste dans le filtre des résidus incombustibles, si bien que le filtre a tendance à se colmater, en particulier dans sa partie de sortie.

Lorsque le filtre est colmaté, il est nécessaire, soit de le remplacer, soit d'effectuer son nettoyage par élimination des résidus incombustibles.

Du fait du coût élevé des filtres à particules, il est intéressant économiquement de prolonger la durée de vie du filtre et d'éviter son remplacement lorsqu'il est colmaté.

Le filtre à particules d'une ligne d'échappement qui est disposé sous le plancher du véhicule automobile et qui comporte une enveloppe métallique intercalée entre deux tronçons de la conduite d'échappement est difficilement démontable, si bien que le remplacement du filtre à particules est une opération difficile et coûteuse et qu'on envisage difficilement d'effectuer périodiquement, pour l'entretien de la ligne d'échappement, une élimination des résidus incombustibles retenus par le filtre.

En outre, la disposition du filtre à particules sous le plancher du véhicule automobile présente des inconvénients du fait des échanges thermiques à travers la paroi de l'enveloppe du filtre dans une zone du véhicule fortement soumise aux conditions climatiques dans lesquelles est utilisé le véhicule automobile et du fait que le filtre à particules n'est pas ou est mal protégé contre des chocs d'obstacles que peut rencontrer le véhicule automobile en circulation.

Dans le JP-11210445, on décrit un filtre à particules d'un moteur à combustion-interne réalisé de manière à éviter une sédimentation des particules tombant de l'élément filtrant du filtre placé verticalement.

Dans le DE-41 34 949, on décrit un procédé et un dispositif pour la surveillance et la régénération d'un filtre à particules d'un moteur à combustion interne placé horizontalement sur la ligne d'échappement du moteur. La régénération du filtre est réalisée par soufflage d'un gaz, par exemple de l'air, à travers le filtre et récupération des particules entraînées par le gaz.

L'invention concerne un véhicule automobile comprenant un compartiment moteur dans une partie avant du véhicule, un moteur thermique disposé à l'intérieur du compartiment moteur, une ligne d'échappement de gaz de combustion du moteur et au moins une tubulure d'échappement assurant la liaison entre la sortie d'au moins un cylindre du moteur thermique et la ligne d'échappement ; la ligne d'échappement comporte un conduit d'échappement et un système de dépollution intercalé sur le conduit d'échappement comprenant au moins un filtre à particules ayant une enveloppe de forme générale cylindrique contenant au moins un élément de filtration ; le véhicule automobile est réalisé de manière à permettre un décolmatage fréquent et facilité du filtre à particules et une meilleure protection du système de dépollution.

Dans ce but, le système de dépollution de la ligne d'échappement est placé dans le compartiment moteur, à l'avant du moteur, l'enveloppe du filtre à particules et l'élément de filtration sont disposés avec leur axe vertical, et l'enveloppe métallique du filtre à particules est reliée de manière démontable à deux tronçons du conduit d'échappement par l'intermédiaire de pièces de raccordement démontables, respectivement supérieure et inférieure.

Afin de bien faire comprendre l'invention, on va décrire à titre d'exemple en se référant aux figures jointes en annexe, un véhicule automobile suivant l'invention et la réalisation du nettoyage du filtre à particules de la ligne d'échappement.
La figure 1 est une vue de dessus d'un véhicule automobile suivant l'invention, selon un premier mode de réalisation.
La figure 2 est une vue en élévation frontale du système de dépollution de la ligne d'échappement du véhicule automobile représenté sur la figure 1.
La figure 3 est une vue en élévation frontale du système de dépollution de la ligne d'échappement du véhicule automobile suivant une variante du premier mode de réalisation.
Les figures 4 et 5 sont relatives à un second mode de réalisation de l'invention.

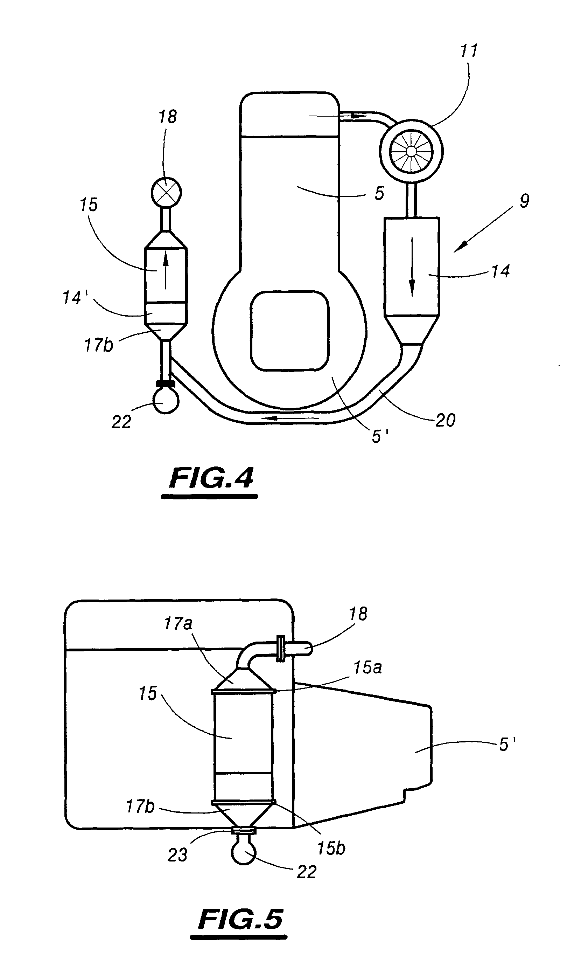

La figure 4 est une vue en élévation frontale du moteur et du filtre à particules.
La figure 5 est une vue en élévation latérale du moteur et du filtre à particules.

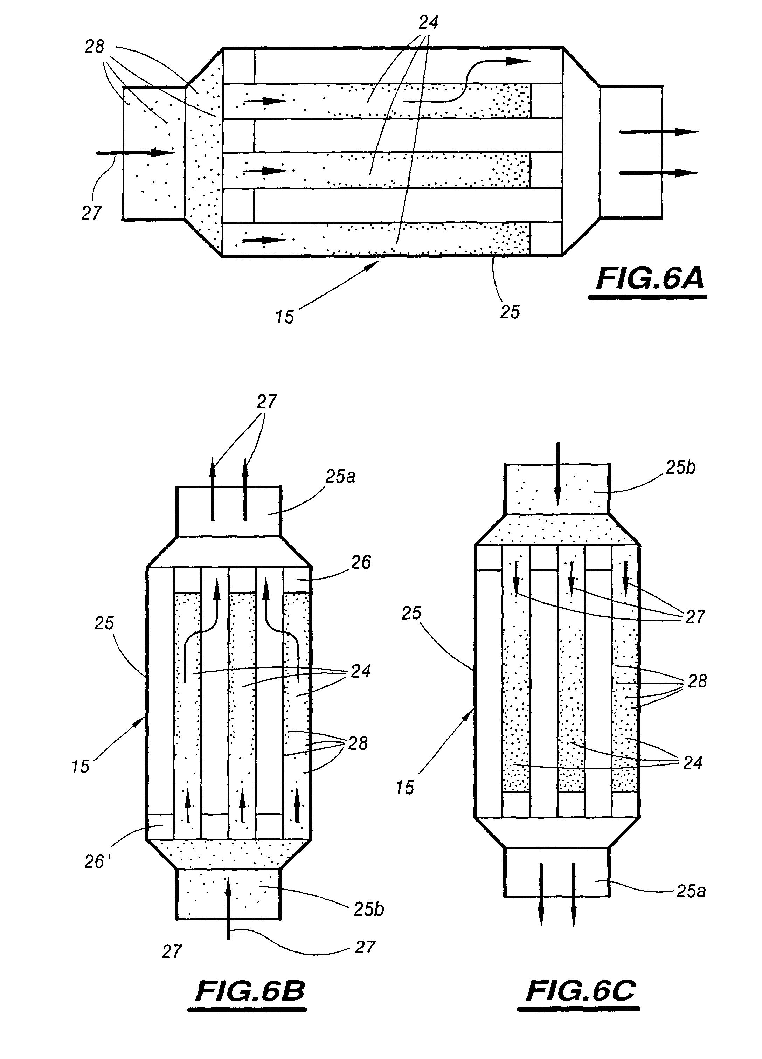

La figure 6A est une vue en coupe d'un filtre à particules d'une ligne d'échappement d'un véhicule automobile suivant l'art antérieur.
La figure 6B est une vue en coupe d'un filtre à particules dans une disposition verticale, parcouru de bas en haut par les gaz d'échappement.
La figure 6C est une vue en coupe d'un filtre à particules dans une disposition verticale, et parcouru de haut en bas par les gaz d'échappement.

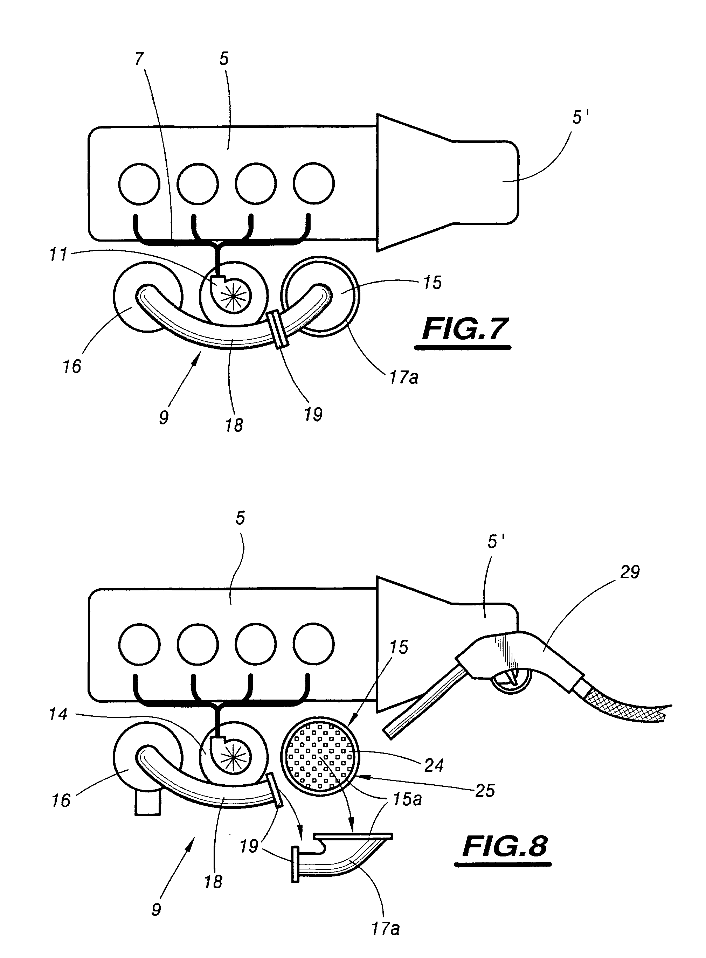

La figure 7 est une vue de dessus du moteur et du système de dépollution d'un véhicule automobile suivant l'invention.
La figure 8 est une vue de dessus du moteur et du système de dépollution, pendant une opération de décolmatage du filtre à particules du système de dépollution.

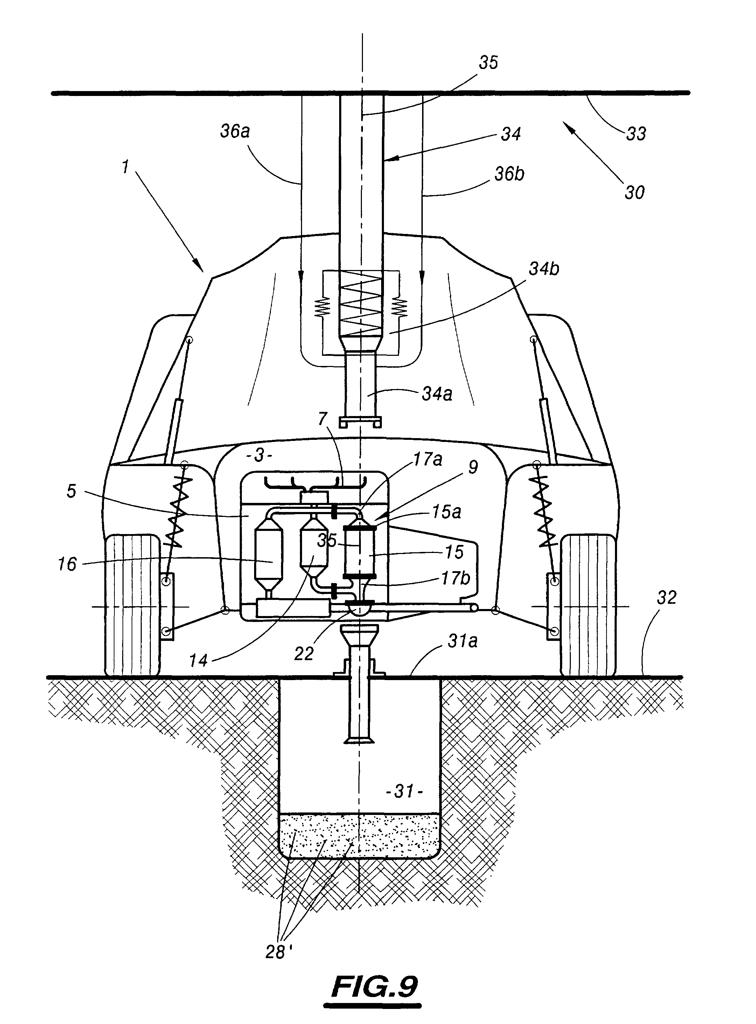

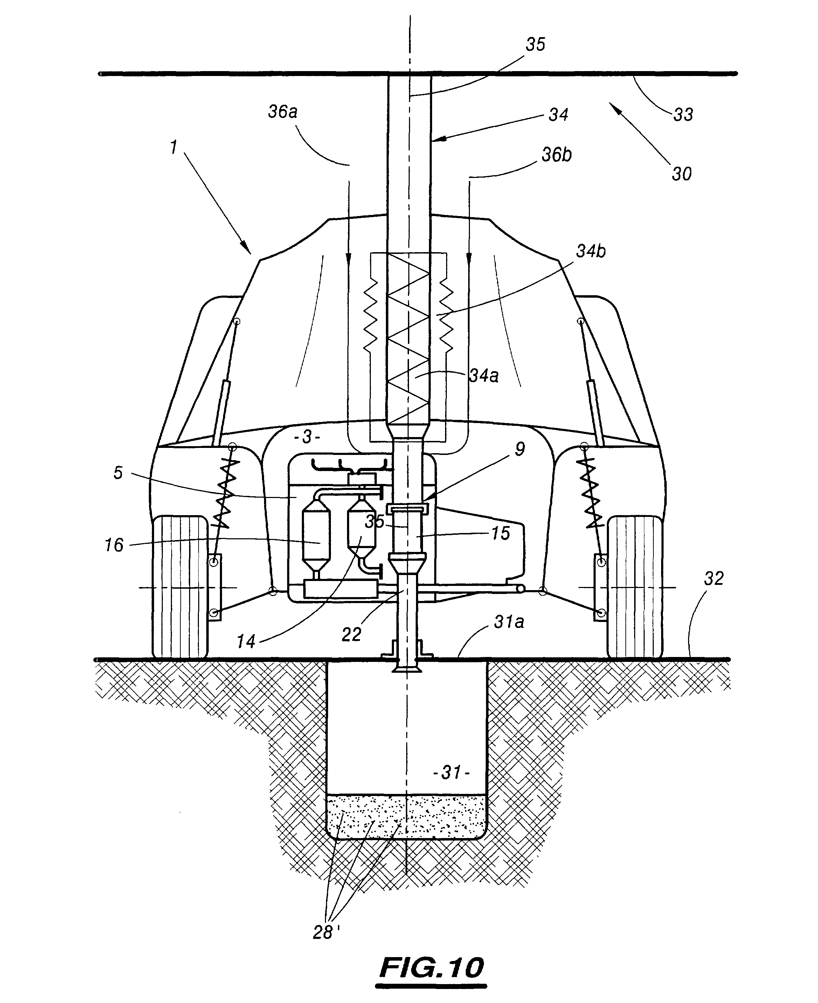

Les figures 9 et 10 sont des vues en élévation et en coupe d'un véhicule automobile suivant l'invention et d'une installation de décolmatage du filtre à particules de la ligne d'échappement du véhicule automobile dans un garage.

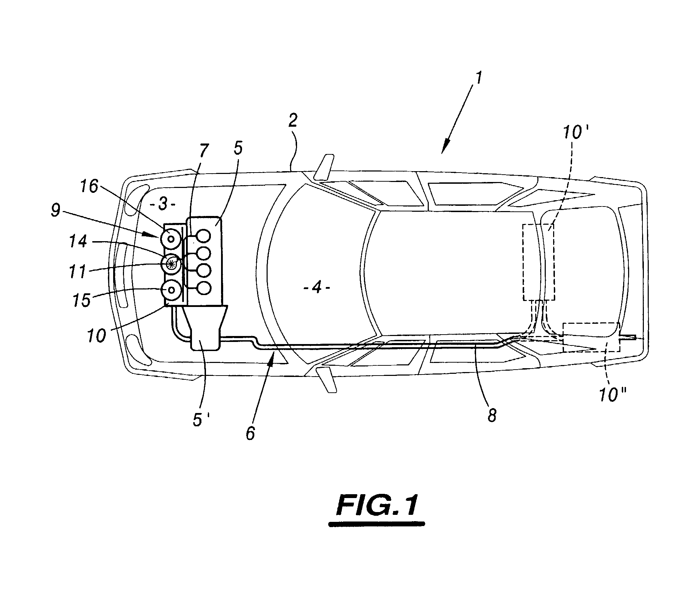

Sur la figure 1, on voit un véhicule automobile suivant l'invention désigné de manière générale par le repère 1 et comportant une carrosserie 2 à l'intérieur de laquelle sont délimités un compartiment moteur 3, à l'avant du véhicule automobile, et un habitacle 4.

Le moteur thermique 5 du véhicule automobile, de type en L et comportant quatre cylindres en ligne, est associé à une boîte de vitesses 5' et disposé transversalement dans le compartiment moteur 3. Le moteur thermique 5 comporte un ensemble 7 de tubulures d'échappement reliées à chacun des cylindres du moteur, au niveau d'une culasse, et à une ligne d'échappement 6 comportant un système de dépollution 9 disposé dans le compartiment moteur 3 à l'avant du moteur thermique 5 et un conduit d'échappement 8 sur lequel est intercalé le système de dépollution 9. Le conduit d'échappement 8 sur lequel est intercalé le système de dépollution 9 est coudé en aval du système de dépollution et placé dans une direction longitudinale du véhicule automobile, sous une partie latérale du plancher. Des dispositifs d'amortissement acoustique 10' et 10" sont intercalés sur une partie terminale du conduit d'échappement 8 à l'arrière du véhicule 1.

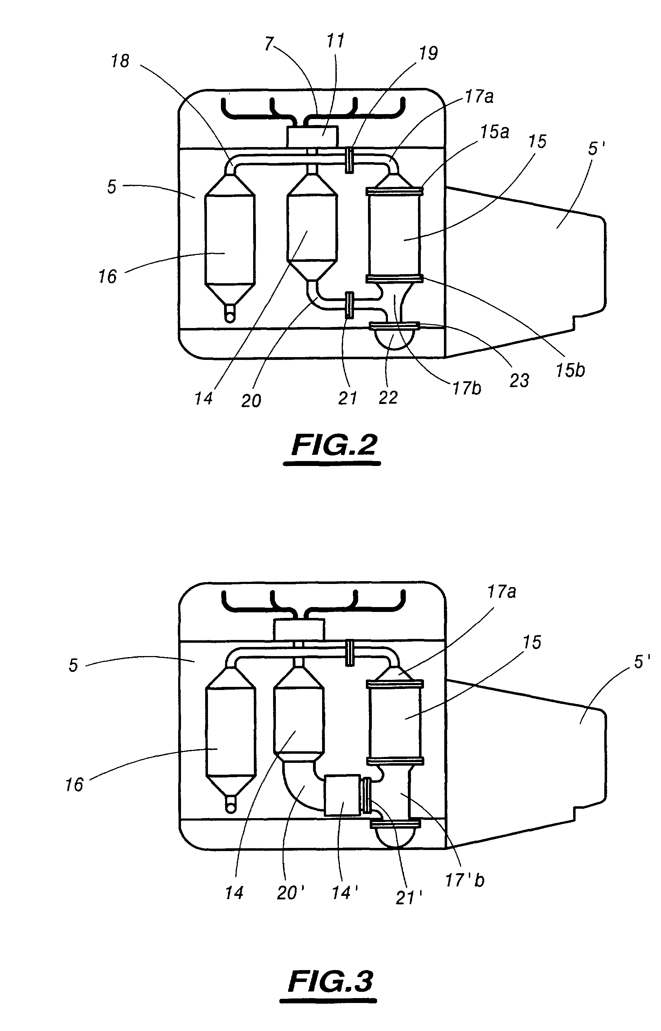

Le système de dépollution 9, comme il est visible sur les figures 1 et 2, comporte un catalyseur de pré-oxydation 14 relié aux tubulures d'échappement 7 du moteur par l'intermédiaire de la turbine du turbocompresseur 11 du moteur, le filtre à particules 15 relié à l'extrémité de sortie du catalyseur de pré-oxydation 14 et un piège à oxyde d'azote ou piège à NOx 16 relié à la partie de sortie du filtre à particules 15. Le catalyseur 14 peut, dans certains cas, être réalisé de manière à présenter également une fonction de piégeage des oxydes d'azote des gaz d'échappement.

Un silencieux 10, intercalé sur le conduit d'échappement 8, peut être également placé à l'intérieur du compartiment moteur 3 dans une disposition horizontale en-dessous du système de dépollution 9, à la sortie du piège à NOx 16.

Comme il est visible sur la figure 2, le catalyseur de pré-oxydation 14, le filtre à particules 15 et le piège à NOx 16 comportent des enveloppes externes métalliques globalement cylindriques qui sont disposées dans le compartiment moteur, à l'avant du moteur 5, avec leurs axes dans la direction verticale.

Le corps cylindrique de l'enveloppe du filtre à particules 15 est relié par un premier et un second flasques démontables 15a et 15b, respectivement, à une première pièce de raccordement 17a et à une seconde pièce de raccordement 17b.

La première pièce de raccordement 17a assure la jonction entre une partie de sortie du filtre à particules 15 et une conduite 18 constituant une partie du conduit d'échappement reliée à la partie d'entrée du piège à NOx 16. La pièce de raccordement 17a est reliée à la conduite 18, par l'intermédiaire de flasques 19 démontables. De même, les flasques 15a de jonction entre la première pièce de raccordement 17a et l'enveloppe cylindrique du filtre à particules 15 sont réalisés sous forme démontable.

La seconde pièce de raccordement 17b est reliée à une conduite de sortie 20 du catalyseur de pré-oxydation 14, par l'intermédiaire de flasques démontables 21, et à la partie d'entrée de l'enveloppe métallique 15 du filtre à particules par les flasques démontables 15b. En outre, la seconde pièce de raccordement 17b comporte une partie inférieure reliée à un bol de récupération de résidus imbrûlés du filtre 22, par l'intermédiaire de brides de flasques démontables 23.

Le filtre à particules 15 est relié, à sa partie inférieure, à la sortie du catalyseur de pré-oxydation 14 et à sa partie supérieure, à l'entrée du piège à NOx 16, de manière que le filtre à particules 15 et les éléments filtrants contenus dans l'enveloppe du filtre soient parcourus par les gaz d'échappement dans la direction verticale et de bas en haut.

Sur la figure 3, on a représenté une variante de réalisation du système de dépollution de la figure 2, les éléments correspondants sur la figure 2 et sur la figure 3 étant affectés des mêmes repères.

La seule différence entre le système de dépollution 9, représenté sur la figure 2, et le système de dépollution représenté sur la figure 3 est relative à la présence, entre le catalyseur de pré-oxydation 14 et l'entrée du filtre à particules 15, d'un second catalyseur de pré-oxydation 14' disposé sur une conduite 20' de grand diamètre joignant la partie de sortie du catalyseur de pré-oxydation 14 à une pièce de raccordement 17'b qui est elle-même reliée à la conduite 20' par des flasques démontables 21'.

La disposition du filtre à particules 15 est identique dans le cas du mode de réalisation représenté sur la figure 2 et dans le cas du mode de réalisation représenté sur la figure 3.

Sur les figures 4 et 5, on a représenté le moteur 5 et le système de dépollution 9 d'un véhicule automobile réalisé suivant l'invention et suivant un second mode de réalisation. Les éléments correspondants sur les figures 4 et 5 relatives au second mode de réalisation et sur les figures 1, 2 et 3 relatives au premier mode de réalisation de l'invention sont désignés par les mêmes repères.

Le second mode de réalisation de l'invention est adapté au cas d'un moteur 5 dont la sortie des gaz d'échappement est prévue sur la face arrière du moteur, au niveau de la culasse ; les tubulures de sortie des gaz d'échappement sont reliées, éventuellement par l'intermédiaire d'un turbocompresseur 11, à un catalyseur 14 d'oxydation ou de préoxydation placé à l'arrière du moteur 5, dans une disposition verticale. Le filtre à particules 15 est placé, dans une disposition verticale, à l'avant du moteur 5, du côté de la face avant du moteur 5 opposée à la face arrière suivant laquelle est placé le catalyseur 14.

Le filtre à particules 15 du second mode de réalisation de l'invention présente une structure globalement analogue à la structure du filtre à particules du premier mode de réalisation.

En particulier, le filtre à particules 15 disposé à l'avant du moteur est relié à la sortie du catalyseur 14, par l'intermédiaire d'une conduite 20 passant sous le bloc moteur dans une direction transversale, entre la face arrière et la face avant du moteur, et d'une pièce de raccordement 17b, de manière que les gaz d'échappement provenant du catalyseur 14 traversent le filtre à particules15 de bas en haut. Un catalyseur d'oxydation supplémentaire 14' peut être placé dans l'enveloppe métallique du filtre à particules en amont du corps de filtration.

Un bol 22 de récupération de résidus incombustibles est placé sous le filtre à particules et relié à la pièce de raccordement 17b par une bride démontable 23.

La pièce de raccordement 17a, à la sortie du filtre à particules 15, est reliée à une conduite 18 qui peut être elle-même reliée à un piège à NOx ou à la conduite d'échappement dirigée vers l'arrière du véhicule automobile.

Les pièces de raccordement 17a et 17b sont elles-mêmes reliées à l'enveloppe du filtre à particules 15 par des brides démontables respectives 15a et 15b.

Sur la figure 6B, on a représenté un filtre à particules 15 dans une disposition verticale suivant l'invention, comparativement à un filtre à particules selon l'art antérieur dans une disposition horizontale représenté sur la figure 6A.

Du fait que le filtre à particules en lui-même est réalisé de la même manière dans le cas de l'art antérieur et dans le cas de l'invention, seule la disposition du filtre à particules étant modifiée, les éléments correspondants sont affectés des mêmes repères sur les figures 6A et 6B.

Dans le cas de l'art antérieur, comme représenté sur la figure 6A, le filtre à particules 15 est intercalé, dans une disposition horizontale, entre deux parties du conduit d'échappement dans une zone du véhicule automobile située sous le plancher.

Dans le cas de l'invention, le filtre à particules 15 est disposé dans le compartiment moteur du véhicule automobile, à l'avant du moteur de propulsion du véhicule, et intercalé sur une partie du conduit d'échappement, dans une disposition verticale.

Le filtre à particules 15 comporte une enveloppe métallique de forme générale cylindrique en tôle métallique, par exemple en acier réfractaire ou en alliage de nickel, à l'intérieur de laquelle des éléments de filtration 24 de forme générale cylindrique sont fixés par l'intermédiaire de plaques de maintien et de canalisation des gaz 26 et 26'.

L'enveloppe 25 comporte une partie d'entrée 25a et une partie de sortie 25b qui sont reliées à deux tronçons du conduit d'échappement de la ligne d'échappement du véhicule automobile, de manière que les gaz d'échappement traversent le filtre à particules 15 et en particulier les éléments de filtration 24 dans la direction indiquée par les flèches 27.

Dans un but de simplification, on n'a pas représenté les flasques de liaison de l'enveloppe cylindrique 25 du filtre à particules 15 avec les éléments de liaison tels que 17a et 17b représentés sur la figure 2 qui correspondent aux parties respectives d'entrée et de sortie 25a et 25b des filtres à particules 15 représentés sur les figures 6B et 6C.

Dans le cas d'un dispositif selon l'art antérieur tel que représenté sur la figure 6A, les gaz d'échappement circulant dans la direction 27 et renfermant des particules de suies 28 ont tendance à entraîner les particules 28 qui se déposent à l'intérieur des éléments de filtration 24, à la sortie des éléments de filtration où ces particules 28 s'accumulent et restent collées. Lorsqu'on effectue la régénération du filtre par combustion des particules de suie, il subsiste des résidus imbrûlés constitués en particulier par des résidus d'additifs de combustion. Ces résidus, sous forme de poudre, s'accumulent dans le filtre à particules et en particulier dans la partie de sortie du filtre. La perte de charge sur la circulation des gaz d'échappement est alors importante, si bien qu'il peut être nécessaire de remplacer ou de nettoyer le filtre, après une durée réduite, du fait de l'accumulation des résidus dans les parties de sortie des éléments de filtration.

Dans le cas de l'invention, du fait de la disposition verticale du filtre à particules, les résidus minéraux sous forme de poudre tombent dans le bol de récupération, par gravité. Le bol de récupération 22 sert à retenir les résidus minéraux restant dans le filtre après sa régénération. Il permet ainsi d'espacer la fréquence de nettoyage du filtre à particules, en procédant à l'élimination partielle des résidus d'additifs, au moment d'une opération de maintenance du véhicule.

Cet effet de la gravité peut être accru par les vibrations du moteur en fonctionnement, pendant la circulation du véhicule. Les particules minérales ou autres ont tendance à retomber à travers la partie d'entrée 25b des gaz d'échappement à l'intérieur d'un bol de récupération tel que 22 (voir figure 2).

Le bol de récupération 22 est réalisé sous une forme facilement démontable, si bien qu'il est possible de réaliser très facilement et très rapidement l'élimination des résidus d'additifs ou d'usure du moteur contenus dans le bol de récupération 22.

Cette opération peut être faite systématiquement, par exemple à chaque vidange d'huile du moteur ou à chaque opération d'entretien du véhicule automobile. On évite ainsi pratiquement tout colmatage excessif du filtre à particules, de sorte que la perte de charge sur la circulation des gaz d'échappement traversant le filtre à particules 15 reste limitée pendant toute la durée de service du véhicule automobile. On réduit ainsi la consommation en carburant du véhicule automobile tout en assurant un fonctionnement durable du filtre à particules.

En outre, le filtre à particules disposé dans le compartiment moteur subit des échanges thermiques avec le milieu extérieur nettement réduits par rapport à ceux auxquels est soumis un filtre à particules suivant l'art antérieur tel que représenté sur la figure 6A, placé sous le plancher du véhicule.

Toutefois, pour obtenir un effet bénéfique de la gravité sur la répartition des résidus 28 à l'intérieur des éléments de filtration cylindriques 24 disposés suivant la direction axiale de l'enveloppe 25 du filtre 15, il est nécessaire de placer le filtre de telle sorte qu'il soit parcouru par les gaz d'échappement circulant suivant la direction verticale 27, de bas en haut.

Dans le cas représenté sur la figure 6C, où les gaz 27 circulent de haut en bas à l'intérieur du filtre, les résidus s'accumulent dans la partie de sortie des éléments de filtration, du fait de l'entraînement des gaz et de la gravité. Cette disposition est donc à proscrire.

On prévoit donc la partie d'entrée 25b de l'enveloppe 25 du filtre en partie basse et la partie de sortie 25a en partie haute, comme représenté sur la figure 6B. Cependant, dans le cas d'une disposition verticale de l'enveloppe 25 avec sa partie d'entrée 25b en position haute et sa partie de sortie 25a en position basse, on pourrait théoriquement garder un avantage par rapport à la disposition de l'art antérieur, si les résidus minéraux pouvaient être évacués par la partie basse de sortie du filtre à particules, dans un bol de récupération 22.

Bien que l'évacuation des résidus minéraux du filtre à particules, dans le bol de récupération à la partie inférieure du filtre, puisse être réalisée de manière continue pendant la circulation du véhicule automobile, en particulier du fait des vibrations et de la gravité, il peut être avantageux, avant de démonter le bol de récupération 22, d'utiliser un outil manuel pour faire subir quelques légers chocs à l'enveloppe du filtre à particules, en limitant cette action pour éviter de détériorer ou de briser les éléments de filtration.

Il est cependant préférable, comme représenté sur les figures 7 et 8, de réaliser l'élimination des résidus minéraux déposés dans les éléments filtrants du filtre à particules, par soufflage d'un fluide à travers les éléments filtrants.

Sur la figure 7, on a représenté, dans une vue de dessus, le moteur 5 du véhicule automobile et le système de dépollution 9 dans une configuration permettant son fonctionnement pour l'épuration des gaz du véhicule automobile.

Sur la figure 8, on a représenté le système de dépollution 9 dans une configuration démontée permettant le nettoyage du corps de filtration 24 du filtre à particules 15.

Dans le mode de réalisation représenté sur la figure 8, les éléments filtrants 24 sont en fait constitués par un seul élément monolithe traversé par des canaux de filtration, ce qui est un mode de réalisation fréquent d'un filtre à particules.

Pour réaliser le nettoyage, on démonte les flasques 15a et 19 par l'intermédiaire desquels la pièce de raccordement 17a est reliée à l'enveloppe métallique 25 du filtre à particules et au tronçon 18 du conduit de raccordement, respectivement, ainsi que le bol de récupération 22 et éventuellement la pièce de raccordement 17b.

On a ainsi accès à la partie supérieure de l'élément de filtration 24 sur laquelle on peut envoyer un jet d'air sous pression de nettoyage avec un pistolet souffleur 29. Le jet d'air sous pression produit un décollement des particules à l'intérieur des canaux du corps de filtration 24, de sorte que les résidus sont entraînés vers le bas et évacués par la partie basse du filtre qui est ouverte, par exemple pour être récupérés dans un récipient de collecte.

Bien entendu, on peut réaliser le nettoyage uniquement par de l'air ou par un liquide de nettoyage tel que de l'eau renfermant des additifs de nettoyage ou encore alternativement par de l'eau et par de l'air selon un cycle de nettoyage qui est décrit dans le brevet français 99-07682. Lorsqu'on utilise un liquide de nettoyage, on peut effectuer une phase finale de séchage, par exemple par de l'air chaud.

Les opérations de nettoyage ou d'élimination des résidus minéraux des éléments filtrants du filtre à particules peuvent être réalisées de manière optimisée dans un garage équipé d'une installation telle que représentée sur les figures 9 et 10.

L'installation de nettoyage d'éléments filtrants de filtre à particules, désignée de manière générale par le repère 30, comporte une fosse 31 de récupération de résidus constituant une cavité dans le sol 32 de l'atelier fermée par un couvercle 31a dans lequel est fixée une goulotte de récupération de particules 31b ayant une partie supérieure en forme d'entonnoir et un axe vertical 35.

L'installation de nettoyage 30 comporte de plus un dispositif 34 de nettoyage par soufflage et circulation de fluide de nettoyage qui est suspendu au plafond 33 de l'atelier et qui est disposé verticalement suivant l'axe de la goulotte de récupération 31b de la fosse 31.

La tête de soufflage et de nettoyage 34a du dispositif de nettoyage 34 est alimentée en eau par une conduite 36a et en air par une conduite 36b qui sont reliées à un circuit d'alimentation comportant des électrovannes permettant de réaliser des cycles de soufflage successifs d'air et d'eau sous pression en utilisant la tête de soufflage 34a.

Le dispositif de nettoyage 34 comporte de plus une partie 34b réalisée sous forme extensible dans la direction verticale 35 ou télescopique, cette partie extensible 34b reliant la tête de soufflage 34a à la partie du dispositif 34 fixée au plafond 33 de l'atelier. De cette manière, on peut déplacer la tête 34a du dispositif de nettoyage 34 suivant l'axe vertical de déplacement et de soufflage du dispositif 34.

Pour réaliser le nettoyage d'un filtre à particules 15 d'un véhicule 1 suivant l'invention, le véhicule 1 est amené dans une position parfaitement centrée au-dessus de la fosse 31, c'est-à-dire dans une position telle que l'axe de déplacement et de soufflage du dispositif de nettoyage 34 soit placé dans le plan vertical longitudinal, de symétrie du véhicule 1 et suivant l'axe vertical 35 du filtre à particules 18.

On ouvre le capot moteur du véhicule, on démonte la pièce de raccordement 17a du filtre à particules par l'intermédiaire des flasques démontables 15a et 19 et le bol de récupération 22 et/ou la pièce de raccordement 17b, de telle sorte que la partie inférieure de l'enveloppe cylindrique du filtre débouche dans la partie évasée en entonnoir de la goulotte de récupération 31b.

On abaisse manuellement la tête de soufflage 34a du dispositif de nettoyage 34 dans la direction verticale, de sa position représentée sur la figure 9 à sa position représentée sur la figure 10, de manière à venir coiffer la partie supérieure de l'enveloppe métallique 25 du filtre à particules 15. La tête de soufflage 34a comporte, à son extrémité, des moyens de fixation amovible permettant de la raccorder à la partie supérieure de l'enveloppe du filtre à particules, par l'intermédiaire d'un flasque 15a de l'enveloppe métallique.

On commande alors un cycle automatique de nettoyage par soufflage d'un liquide de nettoyage constitué d'eau et de produit de nettoyage et d'air à travers le ou les éléments filtrants contenus dans l'enveloppe du filtre, les résidus 28' en suspension dans le liquide de nettoyage étant récupéré sous la forme d'une boue dans la fosse de récupération 31. Ils peuvent être ensuite prélevés dans la fosse de récupération 31, en vue d'une opération de retraitement.

L'opération de nettoyage est suivie d'une opération de séchage par de l'air qui peut être éventuellement chauffé dans une partie de chauffage du dispositif de nettoyage 34.

A la fin du cycle de nettoyage et de séchage, on replace l'installation de nettoyage 34 dans sa position haute représentée sur la figure 9 à partir de sa position basse de service représentée sur la figure 10 et on remet en place le bol de récupération 22 et les pièces de raccordement 17a et 17b de la ligne d'échappement. Le nettoyage du filtre à particules peut donc être réalisé très rapidement et de manière très efficace, soit par le personnel du garage, soit même par l'utilisateur du véhicule, dans une installation en libre service.

Le véhicule automobile suivant l'invention présente donc de nombreux avantages en ce qui concerne le fonctionnement et l'entretien d'un filtre à particules d'un système de dépollution de la ligne d'échappement du véhicule.

L'invention ne se limite pas strictement au mode de réalisation qui a été décrit.

La disposition du filtre à particules par rapport aux autres éléments du système de dépollution peut être différente de celle qui a été décrite et représentée.

Le filtre à particules peut être associé à des éléments supplémentaires tel qu'un catalyseur de pré-oxydation.

Les éléments de raccordement du filtre à particules avec le conduit de la ligne d'échappement peuvent être différents de ceux qui ont été décrits et représentés.

De manière générale, l'invention s'applique à tout véhicule automobile comportant un moteur thermique, que ce moteur thermique soit du type à essence ou Diesel en L ou en V, et une ligne d'échappement ayant un système de dépollution comportant un filtre à particules.

## Revendications

1. Véhicule automobile comprenant un compartiment moteur (3) dans une partie avant du véhicule (1), un moteur thermique (5) disposé à l'intérieur du compartiment moteur (3), une ligne d'échappement (6) de gaz de combustion du moteur et au moins une tubulure d'échappement (7) assurant la liaison entre la sortie d'au moins un cylindre du moteur thermique (5) et la ligne d'échappement (6) qui comporte un conduit d'échappement (8) et un système de dépollution (9) intercalé sur le conduit d'échappement (8) comprenant au moins un filtre à particules (15) ayant une enveloppe (25) de forme générale cylindrique contenant au moins un élément de filtration (24), **caractérisé par le fait que** le système de dépollution (9) est placé dans le compartiment moteur (3), à l'avant du moteur (5), que l'enveloppe (25) du filtre à particules (15) et l'élément de filtration (24) sont disposés avec leur axe vertical, et que l'enveloppe métallique (25) du filtre à particules (15) est reliée de manière démontable à deux tronçons (18, 20) du conduit d'échappement (8) par l'intermédiaire de pièces de raccordement démontables (17a, 17b), respectivement supérieure et inférieure.

2. Véhicule automobile suivant la revendication 1, **caractérisé par le fait que** l'enveloppe (25) du filtre à particules (15) est reliée au conduit d'échappement (8) de la ligne d'échappement (6), de telle sorte que les gaz d'échappement traversent l'élément de filtration (24) du filtre à particules (15), dans une direction verticale (27) dirigée de bas en haut.

3. Véhicule automobile suivant l'une quelconque des revendications 1 et 2, **caractérisé par le fait que** l'enveloppe métallique (25) du filtre à particules (15) est reliée au conduit d'échappement (8) de la ligne d'échappement (6), à sa partie inférieure, par l'intermédiaire de la pièce de raccordement inférieure (17b) sur une partie inférieure de laquelle est fixé, en-dessous et dans l'alignement vertical de l'élément filtrant (24) disposé dans l'enveloppe métallique (25) du filtre à particules (15), un bol de récupération de particules (22).

4. Véhicule automobile suivant l'une quelconque des revendications 1 à 3, **caractérisé par le fait que** le système de dépollution (9) comporte le filtre à particules (15), un catalyseur de pré-oxydation (14) disposé en amont du filtre à particules (15) sur la ligne d'échappement (6) et un piège à NOx (16) disposé en aval du filtre à particules (15) sur la ligne d'échappement (6).

5. Procédé de nettoyage d'un filtre à particules d'un véhicule automobile selon la revendication 1, **caractérisé par le fait :**
- **qu'**on réalise le nettoyage à l'aide d'une installation de nettoyage (30) comportant une fosse de récupération (31) dans le sol (32) d'un garage et un dispositif (34) de nettoyage par insufflation de fluide de nettoyage suspendu à un plafond (33) du garage à la verticale de la fosse (31) ayant un axe vertical de déplacement et de soufflage,
- **qu'**on place le véhicule automobile (1) dans une position telle que son compartiment moteur (3) soit disposé au-dessus de la fosse de récupération (31), l'axe vertical (35) de l'enveloppe (25) du filtre à particules (15) étant disposé suivant l'axe vertical du dispositif de nettoyage (34),
- **qu'**on ouvre le capot moteur du véhicule automobile et qu'on démonte une pièce de raccordement (17a) d'une extrémité supérieure de l'enveloppe (25) du filtre à particules (15) au conduit d'échappement (8),
- **qu'**on déplace une tête (34a) du dispositif de nettoyage (34) suivant l'axe vertical (35),
- **qu'**on raccorde la tête de nettoyage (34a) à l'extrémité supérieure de l'enveloppe métallique (25) du filtre à particules (15),
- **qu'**on démonte l'un au moins du bol de récupération (22) et de la pièce de raccordement (17b) de la ligne d'échappement à la partie inférieure de l'enveloppe métallique (25) du filtre (15), et
- **qu'**on réalise une insufflation de fluide de nettoyage à travers l'au moins un élément de filtration (24) du filtre à particules (15), les résidus imbrûlés (28') retenues par l'élément de filtration (24) étant évacuées dans la fosse de récupération (31).

6. Installation de nettoyage pour la mise en oeuvre du procédé suivant la revendication 5, **caractérisée par le fait qu'**elle comporte une fosse de récupération (31) dans le sol (32) d'un garage, un dispositif de nettoyage (34) par insufflation d'un fluide de nettoyage suspendu au plafond (33) du garage et présentant un axe vertical (35) de déplacement et de soufflage de fluide de nettoyage et une tête de nettoyage (34a) à la verticale de la fosse de récupération (31), la tête de nettoyage (34a) comportant des moyens de raccordement amovibles sur une partie d'extrémité supérieure de l'enveloppe d'un filtre à particules (15) du véhicule automobile (1) et étant raccordée à une partie de fixation du dispositif de nettoyage (34) au plafond (33) du garage par une partie (34b) extensible dans la direction axiale (35).

7. Installation suivant la revendication 6, **caractérisée par le fait que** la tête de nettoyage (34a) du dispositif de nettoyage (34) est reliée à des conduits (36a, 36b) d'alimentation en liquide et en air de nettoyage.

## Patentansprüche

1. Kraftfahrzeug, welches einen Motorraum (3) in einem vorderen Teil des Fahrzeugs (1), eine Wärmekraftmaschine als Motor (5), die im Inneren des Motorraums (3) angeordnet ist, eine Abgasanlage (6) für das Verbrennungsgas des Motors und mindestens einen Abgasstutzen (7), welcher die Verbindung zwischen mindestens einem Zylinder der Wärmekraftmaschine als Motor (5) und der Abgasanlage (6) sicherstellt, umfasst, wobei diese ein Abgasrohr (8) und ein in das Abgasrohr (8) eingefügtes Reinigungssystem (9) aufweist, wobei dieses mindestens einen Partikelfilter (15) beinhaltet, der ein im Allgemeinen zylinderförmiges Gehäuse (25) aufweist, welches mindestens ein Filterelement (24) enthält, **dadurch gekennzeichnet, dass** das Reinigungssystem (9) in dem Motorraum (3) vor dem Motor (5) angeordnet ist, und dass das Gehäuse (25) des Partikelfilters (15) und das Filterelement (24) in ihrer vertikalen Achse angeordnet sind, und dass das metallische Gehäuse (25) des Partikelfilters (15) jeweils oben und unten mittels demontierbaren Anschlussstücken (17a, 17b) demontierbar ausgebildet und mit zwei Rohrstücken (18, 20) des Abgasrohrs (8) verbunden ist.

2. Kraftfahrzeug nach Anspruch 1, **dadurch gekennzeichnet, dass** das metallische Gehäuse (25) des Partikelfilters (15) am Abgasrohr (8) der Abgasanlage (6) so angebracht ist, dass das Abgas das Filterelement (24) des Partikelfilters (15) in einer vertikalen Richtung (27) von unten nach oben gerichtet durchquert.

3. Kraftfahrzeug nach einem der Ansprüche 1 und 2, **dadurch gekennzeichnet, dass** das metallische Gehäuse (25) des Partikelfilters (15) mit dem Abgasrohr (8) der Abgasanlage (6) an seinem unteren Teil mittels des unteren Anschlussstücks (17b) verbunden ist, und dass an einem unteren Teil von diesem, unterhalb und in der vertikalen Achse des Filterelementes (24) fluchtend liegend, angeordnet in dem metallischen Gehäuse (25) des Partikelfilters (15) eine Auffangschale (22) für Partikel befestigt ist.

4. Kraftfahrzeug nach einem der Ansprüche 1 bis 3, **dadurch gekennzeichnet, dass** das Reinigungssystem (9) den Partikelfilter (15), einen in Strömungsrichtung vor dem Partikelfilter (15) in der Abgasanlage (6) angeordneten Katalysator zur Voroxidation (14) und einen in Strömungsrichtung hinter dem Partikelfilter (15) in der Abgasanlage (6) angeordneten NOx-Filter (16) umfasst.

5. Verfahren zur Reinigung eines Partikelfilters eines Kraftfahrzeugs nach Anspruch 1, **gekennzeichnet durch** folgende Schritte:
- Ausführen der Reinigung mit Hilfe einer Reinigungsanlage (30), welche eine Auffanggrube (31) in dem Boden (32) einer Werkstatt und eine Vorrichtung (34) zur Reinigung **durch** Einblasen von Reinigungsflüssigkeit umfasst, welche an einer Decke (33) der Werkstatt in der Vertikalen der Auffanggrube (31) aufgehängt ist und eine vertikale Achse zur Verstellung und des Einblasens aufweist,
- Stellen des Kraftfahrzeugs (1) in eine solche Position, in der sich sein Motorraum (3) über der Auffanggrube (31) befindet, und die Vertikalachse (35) des Gehäuses (25) des Partikelfilters (15) mit der Vertikalachse der Vorrichtung (34) zur Reinigung fluchtet,
- Öffnen der Motorhaube des Kraftfahrzeugs und Demontieren eines Anschlussstücks (17a) eines oberen äußeren Endes des Gehäuses (25) des Partikelfilters (15) zum Abgasrohr (8),
- Verstellen eines Kopfes (34a) der Vorrichtung (34) zur Reinigung längs der Vertikalachse (35),
- Anschließen des Reinigungskopfes (34a) an das obere äußere Ende des metallischen Gehäuses (25) des Partikelfilters (15),
- Demontieren von mindestens einer Auffangschale (22) und des Anschlussstücks (17b) der Abgasanlage an den unteren Abschnitt des metallischen Gehäuses (25) des Filters (15), und
- Durchführen von Einblasen von Reinigungsflüssigkeit quer **durch** mindestens ein Filterelement (24) des Partikelfilters (15), wobei die unverbrannten Rückstände (28'), welche **durch** das Filterelement (24) zurückgehalten wurden, in die Auffanggrube (31) entleert werden.

6. Anlage zum Reinigen zur Anwendung des Verfahrens gemäß Anspruch 5, **dadurch gekennzeichnet, dass** diese eine Auffanggrube (31) in dem Boden (32) einer Werkstatt und eine an einer Decke (33) der Werkstatt aufgehängte Vorrichtung (34) zur Reinigung durch Einblasen von Reinigungsflüssigkeit umfasst, und eine vertikale Achse (35) zur Verstellung und des Einblasens von Reinigungsflüssigkeit und einen Reinigungskopf (34a) in der Vertikalen der Auffanggrube (31) aufweist, wobei der Reinigungskopf (34a) Anschlussmittel umfasst, welche zum Aufsetzen auf einen oberen äußeren Endabschnitt des Gehäuses eines Partikelfilters (15) des Kraftfahrzeugs (1) ausgebildet sind, und wobei diese an ein Befestigungsteil der Vorrichtung (34) zur Reinigung, welche an der Decke (33) der Werkstatt hängt, über ein in der axialen Richtung (35) ausziehbares Teil (34b) angeschlossen werden.

7. Anlage nach Anspruch 6, **dadurch gekennzeichnet, dass** der Reinigungskopf (34a) der Vorrichtung (34) zur Reinigung mit Versorgungsleitungen (36a, 36b) für Reinigungsflüssigkeit und -luft angeschlossen ist.

## Claims

1. Motor vehicle comprising an engine compartment (3) in the front part of the vehicle (1), a thermal engine (5) arranged inside the engine compartment (3), an engine combustion gas exhaust line (6) and at least one exhaust manifold (7) providing the connection between the outlet of at least one cylinder of the thermal engine (5) and the exhaust line (6) which comprises an exhaust pipe (8) and a depollution system (9) fitted on the exhaust pipe (8) comprising at least one particulate filter (15) having a sheath (25) of generally cylindrical form containing at least one filtration element (24), **characterised in that** the depollution system is situated in the engine compartment (3) at the front of the engine (5), **in that** the sheath (25) of the particulate filter (15) and the filtration element (24) are arranged with vertical axes, and **in that** the metal sheath (25) of the particulate filter (15) is connected, in demountable fashion, to two sections (18,20) of the exhaust pipe (8) by means of respective upper and lower demountable connection components (17a, 17b).

2. Motor vehicle according to claim 1, **characterised in that** the sheath (25) of the particulate filter (15) is connected to the exhaust pipe (8) of the exhaust line (6) in such a way that the exhaust gases cross the filtration element (24) of the particulate filter (15) in a vertical direction (27) from bottom to top.

3. Motor vehicle according to any of claims 1 and 2, **characterised in that** the metal sheath (25) of the particulate filter (15) is connected to the exhaust pipe (8) of the exhaust line (6), at its upper part, by means of the lower connection component (17b) on a lower part of which is attached, under and in vertical alignment with the filtering element (24) arranged in the metal sheath (25) of the particulate filter (15), a bowl (22) for recovering particles.

4. Motor vehicle according to any of claims 1 to 3, **characterised in that** the depollution system (9) comprises the particulate filter (15), a preoxidation catalyst (14) arranged upstream of the particulate filter (15) in the exhaust line (6) and a NOx trap (16) arranged downstream of the particulate filter (15) in the exhaust line (6).

5. Method of cleaning a particulate filter of a motor vehicle according to claim 1, **characterised in that** :
- cleaning is carried out with the aid of a cleaning apparatus (30) comprising a recovery pit (31) in the floor (32) of a garage and a device (34), suspended from the ceiling (33) of the garage, for cleaning by the insufflation of cleaning fluid, this device being vertical to the pit (31) and having a vertical displacement and blowing axis,
- the motor vehicle (1) is put in place so that its engine compartment (3) is positioned over the recovery pit (31), the vertical axis (35) of the sheath (25) of the particulate filter (15) being arranged along the vertical axis of the cleaning device (34),
- the bonnet of the motor vehicle is opened and a component (17a) connecting an upper end of the sheath (25) of the particulate filter (15) to the exhaust pipe (8) is demounted,
- a head (34a) of the cleaning device (34) is displaced along the vertical axis (35),
- the cleaning head (34a) is connected to the upper end of the metal sheath (25) of the particulate filter (15),
- at least one of the recovery bowl (22) and the connection component (17b) of the exhaust is demounted on the upper part of the metal sheath (25) of the filter (15), and
- cleaning fluid is insufflated across at least one filtration element (24) of the particulate filter (15), the combustion residue (28') retained by the filtration element (24) being discharged into the recovery pit (31).

6. Cleaning apparatus for the implementation of the method according to claim 5, **characterised in that** it comprises a recovery pit (31) in the floor (32) of a garage, a device (34) for cleaning by the insufflation of a cleaning fluid, this device being suspended from the ceiling (33) of the garage and having a vertical displacement axis (35) for blowing cleaning fluid, a cleaning head (34a) vertical to the recovery pit (31), the cleaning head (34a) comprising detachable connection means on an upper end part of the sheath of a particulate filter (15) of the motor vehicle (1) and being connected to a part for securing the cleaning device (34) to the ceiling (33) of the garage by a part (34b) which is expandable in the axial direction (35).

7. Apparatus according to claim 6, **characterised in that** the cleaning head (34a) of the cleaning device (34) is connected to pipes (36a, 36b) for feeding cleaning liquid and air.
